# FASCICULE DE BREVET EUROPEEN

(11) **EP 4 072 927 B1**
(45) Date de publication et mention de la délivrance du brevet: **03.01.2024**
(21) Numéro de dépôt: 20807040.9
(22) Date de dépôt: 19.11.2020
(51) Int. Cl.: B62D 25/14, B62D 27/06

(54) **DISPOSITIF DE RENFORT D'UNE TRAVERSE DE POSTE DE CONDUITE D'UN VÉHICULE AUTOMOBILE**
VORRICHTUNG ZUR BEFESTIGUNG EINES QUERTRÄGERS EINER FAHRERKABINE EINES KRAFTFAHRZEUGS
DEVICE FOR REINFORCING A CROSS-MEMBER OF A DRIVER'S COMPARTMENT OF A MOTOR VEHICLE

(30) Priorité: 09.12.2019 FR 1913961
(43) Date de publication de la demande: 19.10.2022
(73) Titulaire: Renault s.a.s, 92100 Boulogne Billancourt (FR)
(72) Inventeur: FLANDIN, Michael, 28410 BROUE (FR); HILAIRE, Hervé, 78640 NEAUPHLE LE VIEUX (FR)
(86) Numéro de dépôt international: PCT/EP2020/082650
(87) Numéro de publication internationale: WO 2021/115751

(56) Documents cités:
- WO-A1-2015/146783
- CN-U- 207 984 973
- US-A1- 2011 095 570
- US-A1- 2017 057 538

## Description

La présente invention se rapporte à un dispositif de renfort d'une traverse de poste de conduite d'un véhicule automobile adaptée à s'étendre transversalement dans le véhicule sous une partie supérieure d'une planche de bord supportée par ladite traverse, ledit dispositif comprenant au moins une jambe de renfort adaptée à être fixée à ladite traverse, pour connecter ladite traverse à un élément structurel du véhicule disposé au niveau du plancher du véhicule, ladite jambe de renfort étant munie d'une extrémité inférieure pourvue d'au moins un orifice de fixation traversant d'axe parallèle à la direction transversale du véhicule permettant de réaliser une liaison boulonnée suivant ledit axe pour relier ladite jambe de renfort audit élément structurel.

Par « traverse de poste de conduite », on entend généralement un élément allongé selon un axe transversal au véhicule, qui permet de rigidifier la zone de poste de conduite et qui sert notamment de point d'accroche pour la planche de bord du véhicule. Il est connu d'associer à cette traverse une ou deux jambes de renfort en acier, positionnées sensiblement verticalement sous la planche de bord entre les sièges conducteur et passager avant. Ces jambes de renfort sont destinées à relier le corps principal de la traverse et le plancher du véhicule, pour reprendre une partie des efforts supportés par la traverse et les transmettre à la structure du véhicule via le plancher. A cet effet, chaque jambe de renfort est prévue pour être fixée à un élément structurel de la caisse du véhicule au niveau du plancher du véhicule par au moins une vis traversant un orifice de fixation correspondant d'une extrémité inférieure de la jambe de renfort pour assurer une liaison boulonnée au travers de l'extrémité inférieure de la jambe de renfort avec l'élément structurel de la caisse du véhicule. Ces jambes de renfort contribuent ainsi à améliorer le confort acoustique et vibratoire du véhicule, ainsi qu'à la sécurité passive du véhicule.

Le document CN 207 984 973 U décrit un dispositif de renfort d'une traverse de poste de conduite d'un véhicule automobile selon le préambule de la revendication 1.

En cas d'accident violent avec des énergies de choc élevées, il en résulte souvent un coincement du ou des passagers avant entre la planche de bord et le siège. Aussi, pour extraire un passager piégé, il est nécessaire pour les équipes de secours d'élargir l'espace entre la planche de bord et le siège, ce qui implique notamment de pouvoir effectuer un relevage de la planche de bord. Or, cette technique de désincarcération est difficilement compatible avec la présence des jambes de renfort décrites ci-dessus destinées à améliorer le confort vibratoire et acoustique du véhicule. Autrement dit, ces jambes de renfort empêchent ou à tout le moins retardent les équipes de secours dans leur capacité à effectuer la manoeuvre de relevage de planche de bord pour extraire les passagers avant.

Aussi, un problème qui se pose et que vise à résoudre la présente invention, est de proposer un dispositif de renfort du type précité qui allie le maintien des prestations de confort vibratoire et acoustique du véhicule et la possible réalisation de la manoeuvre de désincarcération de relevage de la planche de bord suite à un violent accident.

A cette fin, l'invention a pour objet un dispositif de renfort d'une traverse de poste de conduite d'un véhicule automobile adaptée à s'étendre transversalement dans le véhicule sous une partie supérieure d'une planche de bord supportée par ladite traverse, ledit dispositif comprenant au moins une jambe de renfort adaptée à être fixée à ladite traverse pour connecter ladite traverse à un élément structurel du véhicule disposé au niveau du plancher du véhicule, ladite jambe de renfort étant munie d'une extrémité inférieure pourvue d'au moins un orifice de fixation traversant d'axe parallèle à la direction transversale du véhicule, permettant de réaliser une liaison boulonnée suivant ledit axe pour relier ladite jambe de renfort audit élément structurel, ledit dispositif de renfort étant caractérisé en ce que ledit orifice de fixation traversant présente un contour fermé sur lui-même, ce contour ayant la forme générale d'une goute dont la pointe est dirigée vers un bord libre inférieur de ladite extrémité inférieure de ladite jambe de renfort.

Selon d'autres caractéristiques préférentielles du dispositif de renfort :
- ladite goute est étirée suivant une direction perpendiculairement à l'axe dudit orifice de fixation entre ledit orifice de fixation et ledit bord libre inférieur ;
- ledit contour dudit orifice de fixation a une forme semi-circulaire sur une partie supérieure de l'orifice, opposé à l'extrémité inférieure de ladite jambe de renfort ;
- ledit contour dudit orifice de fixation a une forme semi-circulaire sur une partie supérieure de l'orifice, opposé à l'extrémité inférieure de ladite jambe de renfort, cette forme semi-circulaire se prolongeant partiellement en dessous d'un axe médian horizontal de l'orifice de fixation ;

- le dispositif comprend deux orifices de fixation traversant juxtaposés et identiques, d'axes parallèles à la direction transversale du véhicule ;
- les deux orifices de fixation sont disposés de façon symétrique par rapport à un axe vertical médian P de l'extrémité inférieure de la jambe de renfort;
- ladite jambe de renfort est destinée à être rapportée sensiblement verticalement sous ladite planche de bord entre les sièges conducteur et passager ;
- le dispositif comprend deux jambes de renfort fixées à ladite traverse.

L'invention a également pour objet un véhicule automobile comprenant une traverse de poste de conduite d'un véhicule automobile s'étendant transversalement dans le véhicule sous une partie supérieure d'une planche de bord supportée par ladite traverse, le véhicule comprenant un dispositif de renfort ayant tout ou partie des caractéristiques précédentes.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une représentation schématique en perspective d'un agencement connu d'un dispositif de renfort d'une traverse de poste de conduite avec une vue de détail de l'extrémité inférieure du dispositif pour la fixation basse sur la caisse du véhicule selon cet agencement connu ;
[Fig. 2a] est une représentation schématique de l'extrémité inférieure du dispositif de renfort de la figure 1 ;
[Fig. 2b] est une représentation schématique de l'extrémité inférieure du dispositif de renfort conforme à l'invention.

Dans la suite de la description, les termes « supérieure « inférieur », « longitudinal », « transversal », « vertical », « avant », « arrière », « haut », « bas », etc. sont définis par référence au système d'axe orthogonal usuel des véhicules automobiles représenté sur les figures, possédant un axe longitudinal X dirigé de l'avant vers arrière du véhicule, un axe transversal Y dirigé vers la droite, et un axe vertical Z dirigé vers le haut.

L'expression sensiblement signifie qu'un léger écart est admis dans le cadre de l'invention par rapport à une valeur nominale déterminée. Par exemple « sensiblement vertical » signifie qu'une inclinaison de l'ordre de 10°par rapport à une direction strictement verticale est admise dans le cadre de l'invention.

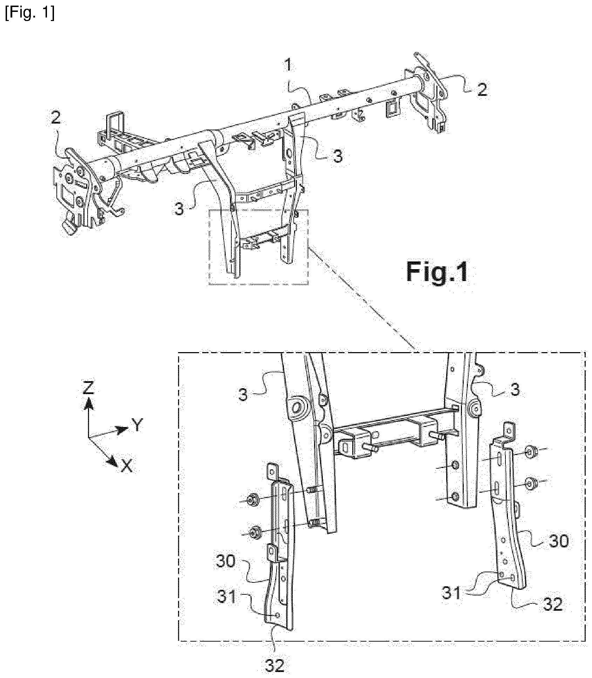

En référence à la Figure 1, on décrit une traverse de poste de conduite 1 destiné à s'étendre sensiblement en vis-à-vis du siège conducteur et du siège passager avant d'un véhicule automobile et dont les extrémités respectives 2 sont destinée à être fixées aux montants latéraux avant gauche et avant droit du véhicule automobile (non représentés). Cette traverse 1 est notamment adaptée pour supporter la planche de bord du véhicule.

La traverse 1 comprend en outre deux jambes de renforts 3, de préférence obtenues en acier, fixées à la traverse 1 sensiblement au centre de celle-ci et s'étendant parallèlement l'une à l'autre selon une direction sensiblement perpendiculaire à celle de la traverse 1. Les jambes de renfort 3 sont destinées à être fixées à la caisse du véhicule automobile à une de leur partie d'extrémité 30, dite extrémité inférieure, s'étendant sous la traverse 10. De la sorte, lorsque la planche de bord est montée sur la traverse, les deux jambes de renfort 3 sont positionnées de façon à s'étendre sensiblement selon la direction verticale Z du véhicule sous la planche de bord du véhicule, entre les sièges conducteur et passager avant.

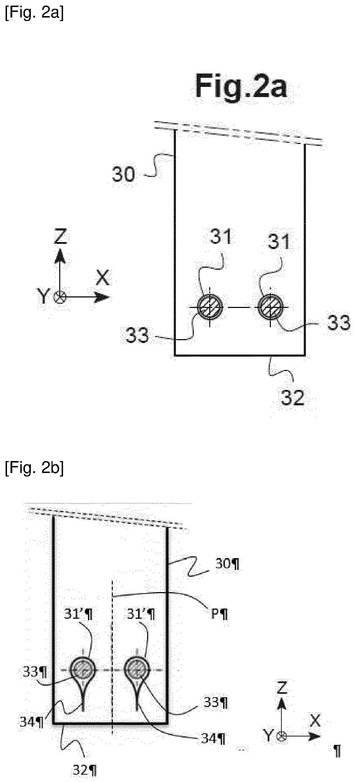

Les extrémités inférieures 30 des jambes de renfort 3 constituent des platines de fixation disposées dans le prolongement des jambes de renfort 3, à l'opposé de la traverse 1 par rapport aux jambes de renfort 3, et sont destinées à être fixées à un élément structurel (non représenté) de la caisse du véhicule, au niveau du plancher, au moyen d'une ou plusieurs liaisons boulonnées s'étendant sensiblement transversalement selon la direction transversale Y. Dans l'exemple représenté, pour assurer la fixation des jambes de renfort 3 à l'élément structurel de la caisse du véhicule, chaque extrémité inférieure 30 est pourvue de deux orifices de fixation 31 traversant, d'axe parallèle à la direction transversale du véhicule, agencés en partie basse de l'extrémité inférieure 30, sensiblement à proximité d'un bord libre inférieur 32 de l'extrémité inférieure 30. Comme on le voit mieux sur la vue de détail de la figure 2a, illustrant l'extrémité inférieure 30 d'une jambe de renfort de la traverse, ces orifices de fixation 31 présentent habituellement une forme circulaire et sont adaptés à recevoir une tige filetée 33 destinée à constituer une partie de l'assemblage boulonné permettant de solidariser l'extrémité inférieure 30 de la jambe de renfort 3 avec ledit élément structure de la caisse du véhicule.

Conformément à l'invention illustré à la figure 2b, la partie basse des orifices de fixation traversant 31', soit leur partie située en vis-à-vis du bord libre inférieur 32 de l'extrémité inférieure 30, est fermée et présente la forme générale d'une goute dont la pointe 34 ou le sommet débouche dans le bord libre inférieur 32 de l'extrémité inférieure 30 de la jambe de renfort 3.

La goute est étirée suivant une direction longitudinale perpendiculairement à l'axe dudit orifice de fixation 31' entre ledit orifice de fixation 31' et ledit bord libre inférieur 32. Le contour de l'orifice de fixation 31' a une forme semi-circulaire sur une partie supérieure de l'orifice, opposé à l'extrémité inférieure de ladite jambe de renfort. Cette forme semi-circulaire se prolonge partiellement en dessous d'un axe médian horizontal de l'orifice de fixation 31'.

On note que la forme générale de la pointe 34 de la goute est telle que les deux bords latéraux de l'orifice 31' se rejoignent sur une même tangente passant par le centre de la forme semi circulaire supérieure de l'orifice 31'.

Comme illustré à la figure 2b, le dispositif comprend deux orifices de fixation traversant 31' juxtaposés et identiques, d'axes parallèles à la direction transversale Y du véhicule. Les deux orifices de fixation 31' sont disposés de façon symétrique par rapport à un axe vertical médian P.

La jambe de renfort 3 est destinée à être rapportée sensiblement verticalement sous ladite planche de bord entre les sièges conducteur et passager. Le dispositif comprend deux jambes de renfort 3 fixées à ladite traverse, et juxtaposées de façon sensiblement parallèle suivant la direction transversale Y du véhicule.

De la sorte, lors d'une intervention de désincarcération mettant en oeuvre un relevage de la planche de bord, la tige 33 de l'assemblage boulonné reçue dans l'orifice de fixation 31' peut avantageusement coulisser dans la direction d'étirement sensiblement verticale de la goute, vers la pointe 34 de celle-ci. Ce coulissement provoque une déformation des bords de l'orifice 31' délimitant la pointe 34, cette déformation allant jusqu'au déchirement de l'extrémité inférieure 30 qui permet de faire déboucher l'orifice 31 sur le bord libre inférieur 32 après déformation. Cette opération permet ainsi de libérer l'extrémité inférieure 30 de la jambe de force 3 de la caisse du véhicule.

## Revendications

1. Dispositif de renfort d'une traverse (1) de poste de conduite d'un véhicule automobile adaptée à s'étendre transversalement dans le véhicule sous une partie supérieure d'une planche de bord supportée par ladite traverse, ledit dispositif comprenant au moins une jambe de renfort (3) adaptée à être fixée à ladite traverse (1) pour connecter ladite traverse à un élément structurel du véhicule disposé au niveau du plancher du véhicule, ladite jambe de renfort (3) étant munie d'une extrémité inférieure (30) pourvue d'au moins un orifice de fixation traversant (31') d'axe parallèle à la direction transversale du véhicule, permettant de réaliser une liaison boulonnée suivant ledit axe pour relier ladite jambe de renfort (3) audit élément structurel, ledit dispositif de renfort étant **caractérisé en ce que** ledit orifice de fixation traversant (31') présente un contour fermé sur lui-même, ce contour ayant la forme générale d'une goute dont la pointe est dirigée vers un bord libre inférieur (32) de ladite extrémité inférieure de ladite jambe de renfort.

2. Dispositif selon la revendication 1, **caractérisé en ce que** ladite goute est étirée suivant une direction perpendiculairement à l'axe dudit orifice de fixation (31') entre ledit orifice de fixation (31') et ledit bord libre inférieur (32).

3. Dispositif selon la revendication 1 ou 2, **caractérisé en ce que** ledit contour dudit orifice de fixation (31') a une forme semi-circulaire sur une partie supérieure de l'orifice, opposé à l'extrémité inférieure de ladite jambe de renfort.

4. Dispositif selon la revendication 1 ou 2, **caractérisé en ce que** ledit contour dudit orifice de fixation (31') a une forme semi-circulaire sur une partie supérieure de l'orifice, opposé à l'extrémité inférieure de ladite jambe de renfort, cette forme semi-circulaire se prolongeant partiellement en dessous d'un axe médian horizontal de l'orifice de fixation (31').

5. Dispositif selon l'une quelconque des revendications précédentes, **caractérisé en ce qu'**il comprend deux orifices de fixation traversant (31') juxtaposés et identiques, d'axes parallèles à la direction transversale du véhicule.

6. Dispositif selon la revendication précédente, **caractérisé en ce que** les deux orifices de fixation (31') sont disposés de façon symétrique par rapport à un axe vertical médian P de l'extrémité inférieure (30) de la jambe de renfort (3).

7. Dispositif selon l'une quelconque des revendications précédentes, **caractérisé en ce que** ladite jambe de renfort (3) est destinée à être rapportée sensiblement verticalement sous ladite planche de bord entre les sièges conducteur et passager.

8. Dispositif selon l'une quelconque des revendications précédentes, **caractérisé en ce que** qu'il comprend deux jambes de renfort (3) fixées à ladite traverse.

9. Véhicule automobile comprenant une traverse (1) de poste de conduite d'un véhicule automobile s'étendant transversalement dans le véhicule sous une partie supérieure d'une planche de bord supportée par ladite traverse, **caractérisé en ce qu'**il comprend un dispositif de renfort selon l'une quelconque des revendications 1 à 8.

## Patentansprüche

1. Vorrichtung zur Verstärkung eines Querträgers (1) einer Fahrerkabine eines Kraftfahrzeugs, der dazu angepasst ist, sich in dem Fahrzeug unter einem oberen Teil eines Armaturenbretts, das von dem Querträger gestützt wird, quer zu erstrecken, wobei die Vorrichtung mindestens eine Verstärkungsstrebe (3) beinhaltet, die dazu angepasst ist, an dem Querträger (1) befestigt zu sein, um den Querträger mit einem Strukturelement des Fahrzeugs, das im Bereich des Bodens des Fahrzeugs angeordnet ist, zu verbinden, wobei die Verstärkungsstrebe (3) ein unteres Ende (30) aufweist, das über mindestens eine durchgehende Befestigungsbohrung (31') mit einer zu der Querrichtung des Fahrzeugs parallelen Achse verfügt, welche es gestattet, eine Schraubverbindung gemäß der Achse herzustellen, um die Verstärkungsstrebe (3) mit dem Strukturelement zu verbinden, wobei die Verstärkungsvorrichtung **dadurch gekennzeichnet ist, dass** die durchgehende Befestigungsbohrung (31') eine in sich geschlossene Kontur aufweist, wobei diese Kontur die allgemeine Form eines Tropfens besitzt, dessen Spitze zu einem unteren freien Ende (32) des unteren Endes der Verstärkungsstrebe zeigt.

2. Vorrichtung nach Anspruch 1, **dadurch gekennzeichnet, dass** der Tropfen gemäß einer Richtung, die zu der Achse der Befestigungsbohrung (31') senkrecht ist, zwischen der Befestigungsbohrung (31') und dem unteren freien Ende (32) langgestreckt ist.

3. Vorrichtung nach Anspruch 1 oder 2, **dadurch gekennzeichnet, dass** die Kontur der Befestigungsbohrung (31') in einem oberen Teil der Bohrung, der zu dem unteren Ende der Verstärkungsstrebe entgegengesetzt ist, halbkreisförmig ist.

4. Vorrichtung nach Anspruch 1 oder 2, **dadurch gekennzeichnet, dass** die Kontur der Befestigungsbohrung (31') in einem oberen Teil der Bohrung, der zu dem unteren Ende der Verstärkungsstrebe entgegengesetzt ist, halbkreisförmig ist, wobei sich diese halbkreisförmige Form unterhalb einer horizontalen Mittelachse der Befestigungsbohrung (31') teilweise fortsetzt.

5. Vorrichtung nach einem beliebigen der vorhergehenden Ansprüche, **dadurch gekennzeichnet, dass** sie nebeneinander liegende und identische durchgehende Befestigungsbohrungen (31') mit Achsen parallel zu der Querrichtung des Fahrzeugs beinhaltet.

6. Vorrichtung nach dem vorhergehenden Anspruch, **dadurch gekennzeichnet, dass** die zwei Befestigungsbohrungen (31') in Bezug auf eine vertikale Mittelachse P des unteren Endes (30) der Verstärkungsstrebe (3) symmetrisch angeordnet sind.

7. Vorrichtung nach einem beliebigen der vorhergehenden Ansprüche, **dadurch gekennzeichnet, dass** die Verstärkungsstrebe (3) dazu bestimmt ist, im Wesentlichen vertikal unter dem Armaturenbrett zwischen dem Fahrer- und dem Beifahrersitz angebracht zu sein.

8. Vorrichtung nach einem beliebigen der vorhergehenden Ansprüche, **dadurch gekennzeichnet, dass** sie zwei Verstärkungsstreben (3) beinhaltet, die an dem Querträger befestigt sind.

9. Kraftfahrzeug, das einen Querträger (1) einer Fahrerkabine eines Kraftfahrzeugs beinhaltet, der sich in dem Fahrzeug unter einem oberen Teil eines Armaturenbretts, das von dem Querträger gestützt wird, quer erstreckt, **dadurch gekennzeichnet, dass** es eine Verstärkungsvorrichtung nach einem beliebigen der Ansprüche 1 bis 8 beinhaltet.

## Claims

1. Device for reinforcing a motor vehicle driver's compartment crossmember (1) designed to extend transversely in the vehicle below an upper part of a dashboard supported by said crossmember, said device comprising at least one reinforcing leg (3) designed to be fastened to said crossmember (1) in order to connect said crossmember to a structural element of the vehicle arranged at the floor of the vehicle, said reinforcing leg (3) being provided with a lower end (30) provided with at least one fastening through-orifice (31') having an axis parallel to the transverse direction of the vehicle and making it possible to establish a bolted connection along said axis in order to connect said reinforcing leg (3) to said structural element, said reinforcing device being **characterized in that** said fastening through-orifice (31') has a contour which is closed on itself, this contour having the general shape of a drop whose tip is directed towards a lower free edge (32) of said lower end of said reinforcing leg.

2. Device according to Claim 1, **characterized in that** said drop is stretched out in a direction perpendicular to the axis of said fastening orifice (31') between said fastening orifice (31') and said lower free edge (32).

3. Device according to Claim 1 or 2, **characterized in that** said contour of said fastening orifice (31') has a semicircular shape over an upper part of the orifice, opposite to the lower end of said reinforcing leg.

4. Device according to Claim 1 or 2, **characterized in that** said contour of said fastening orifice (31') has a semicircular shape over an upper part of the orifice, opposite to the lower end of said reinforcing leg, this semicircular shape extending partially below a horizontal median axis of the fastening orifice (31').

5. Device according to any one of the preceding claims, **characterized in that** it comprises two identical juxtaposed fastening through-orifices (31') having axes parallel to the transverse direction of the vehicle.

6. Device according to the preceding claim, **characterized in that** the two fastening orifices (31') are arranged symmetrically with respect to a median vertical axis P of the lower end (30) of the reinforcing leg (3).

7. Device according to any one of the preceding claims, **characterized in that** said reinforcing leg (3) is intended to be fitted substantially vertically below said dashboard between the driver and passenger seats.

8. Device according to any one of the preceding claims, **characterized in that** it comprises two reinforcing legs (3) fastened to said crossmember.

9. Motor vehicle comprising a motor vehicle driver's compartment crossmember (1) extending transversely in the vehicle below an upper part of a dashboard supported by said crossmember, **characterized in that** it comprises a reinforcing device according to any one of Claims 1 to 8.
